# EUROPÄISCHE PATENTSCHRIFT

(11) **EP 0 857 741 B1**
(45) Veröffentlichungstag und Bekanntmachung des Hinweises auf die Patenterteilung: **31.03.2004**
(21) Anmeldenummer: 98101144.8
(22) Anmeldetag: 23.01.1998
(51) Int. Cl.: C08G 18/69, C08G 18/70, C08G 18/79, C09J 175/00

(54) **Wässrige, vernetzende Polymerdispersionen sowie ihre Verwendung für die Herstellung von wässrigen Klebstoffen**
Aqueous crosslinking polymer dispersions as well as their use for the manufacturing of aqueous adhesives
Dispersions aqueuses durcissables de polymères ainsi que leur utilisation pour la fabrication d'adhésifs aqueux

(30) Priorität: 05.02.1997 DE 19704245
(43) Veröffentlichungstag der Anmeldung: 12.08.1998
(73) Patentinhaber: Bayer MaterialScience AG, 51368 Leverkusen (DE)
(72) Erfinder: Ganster, Otto, Dr., 51519 Odenthal (DE); Büchner, Jörg, 51467 Bergisch Gladbach (DE); Lucas, Heinz-Werner, Dr., 51467 Bergisch Gladbach (DE)

(56) Entgegenhaltungen:
- EP-A- 0 161 373
- EP-A- 0 540 985
- US-A- 4 663 377
- US-A- 5 200 489
- DATABASE WPI Week 7826 Derwent Publications Ltd., London, GB; AN 78-46715a XP002057772 & JP 53 056 232 A (TOYO SODA KK) , 22.Mai 1978

## Beschreibung

Die vorliegende Erfindung betrifft wäßrige, vernetzende Polymerdispersionen bestehend aus wäßrigen, alkalischen Polymerisaten auf Basis von 2-Chlorbutadien-1,3 und aus durch Cyclotrimerisierung aliphatischer und/oder cycloaliphatischer Diisocyanate erhaltenen Polyisocyanaten sowie ihre Verwendung zur Herstellung von wäßrigen Klebstoffen.

In den letzten Jahren stieg die Bedeutung wäßriger Klebstoffe wegen der Bemühungen um eine Verminderung von Lösungsmittelemissionen und Beseitigung der Brandgefahr beim Hersteller wie beim Verarbeiter von Klebstoffen stark an. Ein Beispiel für diese Entwicklung ist der Übergang von PU-Lösemittel-Klebstoffen zu den entsprechenden PU-Dispersions-Klebstoffen, wie er im Bereich der Möbelindustrie, im Automobilbau und im Bereich der Schuhindustrie zu beobachten ist. Dieser erfolgreiche Übergang war möglich, weil entsprechend der bei Lösungsmittel-Systemen seit vielen Jahren bekannten Isocyanat-Vernetzung heute auch eine Vernetzung in wäßrigen Dispersionssystemen mit geeigneten Isocyanat-Vernetzern möglich ist.

So wird in EP-A-206 059 eine in Wasser dispergierbare Polyisocyanat-Zubereitung beschrieben, die als Zusatzmittel für wäßrige Klebstoffe geeignet ist. In der Praxis zeigt sich jedoch, daß die in EP-A-206 059 beschriebene Polyisocyanat-Zubereitung, die auf 1,6-Diisocyanatohexan (HDI) basiert, beim Versuch der Vernetzung von Klebstoffen auf Basis stark alkalischer wäßriger Polymerdispersionen zu praktisch unüberwindlichen Problemen führt, weil die nach dem Eindispergieren der Vernetzer-Isocyanate auf HDI-Basis erhaltene Polymerdispersion von 2-Chlorbutadien-1,3 innerhalb kurzer Zeit verquallt und der getrocknete Klebfilm keine reproduzierbare Verklebung mehr zuläßt. In EP-A-206 059 ist auch der Einsatz von Vernetzerisocyanaten auf IPDI-Basis beispielhaft für pH-neutrale bzw. leicht saure Polymer-Dispersionen beschrieben. Dagegen ergaben Praxisversuche mit alkalischen Polymer-Dispersionen auf Basis 2-Chlorbutadien-1,3 im Normalfall Klebstoffe mit wenig befriedigenden Ergebnissen bei höherer Temperatur.

Aufgabe der vorliegenden Erfindung ist es nun, auf Basis stark alkalischer Polymerisate bzw. Copolymerisate des 2-Chlorbutadiens-1,3 geeignete Klebstoffe zur Verfügung zu stellen, die eine hohe Wärmestandfestigkeit besitzen und über eine ausreichend lange Verarbeitbarkeit des Klebstoffs verfügen, ohne daß eine Verquallung oder Koagulation der Klebstoffmischung stattfindet.

Die Aufgabe wurde durch die zur Verfügungstellung der erfindungsgemäßen wäßrigen, vernetzenden Polymerdispersionen bestehend aus wäßrigen, alkalischen Polymerdispersionen auf Basis von 2-Chlorbutadien-1,3 und aliphatischen und/oder cycloaliphatischen Polyisocyanaten mit überwiegend oder ausschließlich sekundär gebundenen NCO-Gruppen gelöst.

Gegenstand der vorliegenden Erfindung sind demnach wäßrige, vernetzende Polymerdispersionen, die dadurch gekennzeichnet sind, daß sie aus
A) 98 bis 80 Gew.-% einer 40 bis 60 %igen wäßrigen, alkalischen Polymerdispersion auf Basis von 2-Chlorbutadien-1,3 mit einem pH-Wert von ≥9,5 und einem durch Abspaltung von Chloridionen aus dem Polymer entstandenen Chloridgehalt von ≥300 ppm
   und
B) 2 bis 20 Gew.-% durch Cyclotrimerisierung aliphatischer und/oder cylcoaliphatischer Diisocyanate erhaltenen Polyisocyanaten mit überwiegend oder ausschließlich sekundär gebundenen NCO-Gruppen
bestehen.

Bevorzugt sind wäßrige, vernetzende Polymerdispersionen, die die Komponente A) zu 95 bis 90 Gew.-% und die Komponente B) zu 5 bis 10 Gew.-% enthalten.

Die Komponente A) wird bevorzugt in Form einer 50 bis 60 %igen wäßrigen alkalischen Polymerdispersion eingesetzt mit einem pH-Wert von bevorzugt 11-13 und einem durch Abspaltung von Chloridionen aus dem Polymer entstandenen Chloridgehalt von bevorzugt ≥400 ppm.

Für die erfindungsgemäßen Polymerdispersionen ist es wichtig, daß die wäßrige Polymerdispersion des 2-Chlorbutadiens-1,3 einen bestimmten Anteil von mit Isocyanat vernetzbaren OH-Gruppen enthält, der durch Abspaltung von Chloridionen aus dem 2-Chlorbutadien-Polymer erhalten wird. Dadurch wird die Vernetzbarkeit der 2-Chlorbutadien-Polymere mit den Isocyanaten beträchtlich gesteigert. Die Abspaltung der Chloridionen aus dem 2-Chlorbutadien-Polymer kann in üblicher Weise durch Lagerung der wäßrigen, alkalischen Polymerdispersion bei Raumtemperatur erfolgen oder beschleunigt werden durch eine Wärmebehandlung, bevorzugt bei Temperaturen von 40 bis 90°C.

Der pH-Wert der wäßrigen, alkalischen Polymerdispersion des 2-Chlorbutadiens ergibt sich durch entsprechende Gehalte an Alkalihydroxid und/oder Alkaliseifen, die zur chemischen, mikrobiellen oder kolloidchemischen Stabilisierung der Polymerdispersionen benötigt werden.

Die erfindungsgemäß als Komponente A) einzusetzenden wäßrigen, alkalischen Polymerdispersionen auf Basis von 2-Chlorbutadien-1,3 können in üblicher Weise hergestellt werden durch z.B. Emulsionspolymerisation von 2-Chlorbutadien-1,3 wie in Ullmann (4.) 13, 614-617 beschrieben. Selbstverständlich ist es auch möglich, Copolymerisate des 2-Chlorbutadiens-1,3 mit anderen olefinisch ungesättigten Monomeren, wie z.B. 2,3-Dichlorbutatien oder Methacrylsäure, als Komponente A) einzusetzen. Solche Copolymerisate sind ebenfalls bekannt und beispielsweise an oben genannter Stelle beschrieben.

Neben der Komponente A) enthalten die erfindungsgemäßen wäßrigen, vernetzenden Polymerdispersionen als Komponente B) sogenannte Vernetzerisocyanate, die durch Cyclotrimerisierung aliphatischer und/oder cycloaliphatischer Diisocyanate erhalten werden und Polyisocyanate mit überwiegend oder ausschließlich sekundär gebundenen NCO-Gruppen darstellen.

Polyisocyanate mit überwiegend sekundär gebundenen NCO-Gruppen sind
B1) entweder solche, für die als Ausgangsstoffe zur Cyclotrimerisierung Diisocyanate verwendet werden, die aufgrund ihrer chemischen Struktur keine primären NCO-Gruppen besitzen, z.B. 4,4'-Diisocyanatodicyclohexylmethan (Desmodur W®, Bayer AG),
   oder solche
B2) Polyisocyanate, für die als Ausgangsstoffe zur Cyclotrimerisierung Diisocyanate verwendet werden, die neben sekundären NCO-Gruppen noch primäre NCO-Gruppen enthalten, z.B. 1-Isocyanato-3,3,5-trimethyl-5-isocyanatomethyl-cyclohexan (Isophorondiisocyanat, Bayer AG). Durch den Reaktivitätsunterschied zwischen primären und sekundären/tertiären NCO-Gruppen wird im Verlauf der Trimerisierungsreaktion vorzugsweise die reaktivere primäre umgesetzt, so daß im erhaltenen Polyisocyanat überwiegend die weniger reaktiven sekundären NCO-Gruppen verbleiben.

Als Ausgangsdiisocyanate zur Herstellung der erfindungsgemäßen Komponente B) eignen sich insbesonders 4,4'-Diisocyanatodicyclohexylmethan (Desmodur W, Bayer AG) und Isophorondiisocyanat (IPDI, Bayer AG).

Bevorzugte Polyisocyanate sind Cyclotrimerisierungsprodukte des Isophorondiisocyanats.

Die erfindungsgemäß als Komponente B) einzusetzenden Cyclotrimerisate aliphatischer und/oder cycloaliphatischer Polyisocyanate mit überwiegend oder ausschließlich sekundär gebundenen NCO-Gruppen enthalten die Ausgangsisocyanate (Restmonomeren) in einer Menge von weniger als 0,5, bevorzugt weniger als 0,2 Gew.-%. Selbstverständlich ist es möglich, der Komponente B) noch geeignete Emulgatoren zuzusetzen, wobei die Menge an Emulgator so gewählt wird, daß die Polyisocyanate (Komponente B)) in der zu vernetzenden Dispersion (Komponente A)) gut dispergierbar ist. Geeignete Emulgatoren sind insbesondere Umsetzungsprodukte aliphatischer Polyisocyanate mit nicht-ionischen Ethylenoxid-Einheiten aufweisenden Polyetheralkoholen, wobei das NCO/OH-Äquivalentverhältnis mindestens 1:1, im allgemeinen 2:1 bis 1000:1 beträgt. Geeignete Polyetheralkohole sind beispielsweise Alkoxylierungsprodukte, vorzugsweise ein- oder auch mehrwertiger Startermoleküle, wie Methanol, n-Butanol, Cyclohexanol, 3-Methyl-3-hydroxymethyloxetan, Phenol, Ethylenglykol, Propylenglykol, Trimethylolpropan und Glycerin, die mindestens eine, im allgemeinen 10 bis 70 Ethylenoxideinheiten enthaltende Polyetherkette besitzen. Die entsprechenden einwertigen Polyetheralkohole sind besonders gut für die Herstellung der Emulgatoren geeignet. Herstellung und Zusammensetzung solcher Emulgatoren ist beschrieben in EP-A-206 059. Die Menge an Emulgatoren, die der Komponente B) üblicherweise zugesetzt wird, beträgt 0,1 bis 20 Gew.-%, bevorzugt 5 bis 15 Gew.-%, bezogen auf das eingesetzte Polyisocyanat.

Darüber hinaus ist es möglich, der Komponente B) zur Viskositätserniedrigung geringe Mengen, im allgemeinen Mengen ≤35 Gew.-%, an organischen Lösungsmitteln, wie Aceton, Ethylacetat, Methoxypropylacetat, Propylencarbonat, Xylol und/oder Solvesso (ein Produkt der Firma Shell), zuzusetzen.

Die erfindungsgemäßen wäßrigen vernetzenden Polymerdispersionen können darüber hinaus auch für die Klebstofftechnologie üblichen Hilfs- und Zusatzmittel enthalten. Hierzu gehören beispielsweise Füllstoffe, wie Quarzmehl, Zinkoxyd, hochdisperse Kieselsäure, Calciumcarbonat, Kreide, Dolomit oder Talkum, die oft zusammen mit Netzmitteln, wie z.B. Polyphosphaten, oder Salzen der Naphthalinsulfonsäure eingesetzt werden, wobei die Netzmittel im allgemeinen in Mengen von 0,2 bis 0,6 Gew.-%, bezogen auf eingesetzten Füllstoff, zugesetzt werden. Die Menge an zuzusetzenden Füllstoffen beträgt üblicherweise 0,1 bis 15 Gew.-%, bezogen auf den Gehalt an Polymerisat der 2-Chlorbutadiens.

Weitere geeignete Hilfsmittel sind z.B. in Mengen von 0,01 bis 1 Gew.-%, bezogen auf Gesamtpolymerdispersion, einzusetzende organische Verdickungsmittel, wie Cellulose-Derivate, Alginate, Stärke oder Stärke-Derivate oder Polyacrylsäure oder in Mengen von 0,05 bis 5 Gew.-%, bezogen auf Gesamtpolymerdispersion, einzusetzende anorganische Verdickungsmittel, wie Bentonite. Darüber hinaus können noch Fungizide zur Konservierung des Klebstoffes zugesetzt werden in Mengen von üblicherweise 0,2 bis 1 Gew.-%, ebenfalls bezogen auf die Gesamtmenge an Polymerdispersion.

Auch klebrig-machende Harze, wie z.B. Naturharze, oder modifizierte Harze wie Kolophoniumester bzw. Terpenphenolharze, oder synthetische Harze, wie Phthalatharze, können der erfindungsgemäßen Polymerdispersion in Anteilen bis zu 40 Gew.-% bezogen auf den Gehalt an Polymerisat der 2-Chlorbutadiens zugemischt werden.

Die erfindungsgemäßen, wäßrigen Polymerdispersionen eignen sich zum Verkleben beliebiger Werkstoffe gleicher oder verschiedener Art, z.B. zum Verkleben von Holz und Papier, Kunststoffen, Schaumstoffen, Textilien, Leder und anorganischen Materialien, wie Keramik, Steingut oder Asbestzement.

Die Verwendung der erfindungsgemäßen Polymerdispersionen bewirkt überraschenderweise eine deutliche Verbesserung der Wärmebeständigkeit, verbunden mit einer verbesserten Dauer der Verarbeitbarkeit (wenigstens 5 Stunden) im Vergleich zum Stand der Technik der Klebstoffe auf Basis üblicher alkalischer Dispersionen des Poly-2-chlorbutadiens-1,3, welche einen geringen Gehalt an Isocyanat-vernetzbaren Gruppen besitzen.

Diese dem Stand der Technik entsprechenden alkalischen Dispersionen enthalten nur einen geringen Gehalt an Isocyanat-vernetzbaren Gruppen, so daß die durch Umsetzung mit Isocyanaten erreichbare Erhöhung der Wärmefestigkeit nur gering ist.

### Beispiele:

Die nachfolgenden Beispiele dienen zur weiteren Erläuterung der Erfindung. Alle Prozentangaben sind Gewichtsprozent.

### A) Ausgangsstoffe:

### Polyisocyanat 1 (für Vergleichsbeispiele 1 und 1a)

Durch Trimerisierung von 1,6-Diisocyanatohexan hergestelltes Isocyanuratgruppen aufweisendes Polyisocyanat, welches im wesentlichen aus Tris-(6-isocyanatohexyl)-isocyanurat und dessen höheren Homologen besteht. Der NCO-Gehalt beträgt 21,6 %, die mittlere Funktionalität beträgt etwa 3,5 und der Gehalt an monomeren Diisocyanat ist <0,3 %. Die freien NCO-Gruppen sind alle primär.

### Polyisocyanat 2 (für Vergleichsbeispiele 2 und 5)

1000 g des Polyisocyanats 1 werden zur Hydrophilierung mit 130 g eines Methanol-gestarteten Polyethylenoxidpolyethers vom Molgewicht 350 umgesetzt. Der NCO-Gehalt ist dann 17,4 %, der Gehalt an monomerem Diisocyanat ist <0,3 %. Die freien NCO-Gruppen sind alle primär.

### Polyisocyanat 3 (für erfindungsgemäße Beispiele 3, 7 bis 10)

1000 g eines durch Trimerisierung von IPDI erhaltenen Isocyanato-Isocyanurats mit einem NCO-Gehalt von 16,6 % und einer mittleren Funktionalität von ca. 3,5 wird zur Hydrophilierung mit 150 g eines Methanol-gestarteten Polyethylenoxidpolyethers vom Molekulargewicht 490 umgesetzt. Der NCO-Gehalt liegt dann bei 13,2 %. Zur Verminderung der Viskosität wird das erhaltene Produkt durch Zugabe von 30 % einer 1:1-Mischung Methoxypropanol/Xylol verdünnt. Nach der Verdünnung liegt der NCO-Gehalt bei ca. 9,5 % und die Viskosität bei ca. 700 mPa·s. Die freien NCO-Gruppen sind in der Mehrzahl sekundär.

### Polyisocyanat 4 (für Vergleichsbeispiele 4 und 11)

Durch Trimerisierung von IMCI hergestelltes, Isocyanuratgruppen aufweisendes Polyisocyanat. Der NCO-Gehalt beträgt ca. 14,7 % und die Funktionalität ca. 3,3; der Restgehalt an monomerem Diisocyanat ist <0,5 %. Zur Erniedrigung der Viskosität wird 30 % Methoxypropylacetat verdünnt. Nach der Verdünnung beträgt der NCO-Gehalt ca. 11,3 %. Die Viskosität der Lösung beträgt 25 000 mPa·s. Die freien NCO-Gruppen sind im wesentlichen tertiär.

### Verwendete Polychloroprendispersion

Die verwendeten Polychloroprendispersionen sind in Tabelle 1 unter den Bezeichnungen CR-Dispersion 1 bis 4 beschrieben.

Die Versuche wurden mit Dispercoll C 84 durchgeführt. Dispercoll C 84 ist ein handelsübliches Emulsionspolymerisat des 2-Chlorbutadiens mit einem pH-Wert von 11 bis 13 (hergestellt von der Bayer AG, Leverkusen). Für einige der Versuche wurde Dispercoll C 84 zur hydrolytischen Abspaltung eines Teils der an die Polymerkette gebundenen Chloratome durch Lagerung bei 50° nachbehandelt. Das Ausmaß der hydrolytischen Abspaltung des Cl ist am Cl⁻-Gehalt der Dispersion (bestimmt durch argentometrische Titration) zu erkennen:

**Tabelle 1**

| | Lagerung bei 50°C (Tage) | pH-Wert | Chlorid-Gehalt (ppm) |
|---|---|---|---|
| CR-Dispersion 1 | Originalprodukt | 13 | 293 |
| CR-Dispersion 2 | 2 | 12,3 | 584 |
| CR-Disperison 3 | 4 | 12,2 | 805 |
| CR-Dispersion 4 | 8 | 11,5 | 1140 |

### B) Klebstoff-Formulierung:

Die in Tabelle 2 aufgeführte Klebstoff-Formulierung wurde zur Durchführung aller Klebversuche verwendet. Emulvin W und Vulkanox DDA sind Handelsprodukte der Bayer AG). Oulotack 90 D ist ein Handelsprodukt der Fa. Veitsoluoto (Finnland).

**Tabelle 2**

| Produkt | Funktion | Einsatz als | Gehalt | Gew,-Teile |
|---|---|---|---|---|
| CR-Dispersion (1 bis 4) | Polymer | Dispersion | 55 % | 100 |
| Emulvin W | Emulgator | Lösung | 20 % | 2 |
| Zinkoxid aktiv | Stabilisator | Dispersion | 50 % | 4 |
| Vulkanox DDA-EM 50 | Antioxidans | Dispersion | 50 % | 2 |
| Oulotack 90 D | Harz | Dispersion | 52 % | 30 |

### C) Durchführung der Koagulationsversuche:

Ein 1 l-Dreihalskolben aus Glas wird ausgestattet mit einem Rührwerk und einer Glaselektrode zur Messung des pH-Werts. 500 g der CR-Dispersion 1 werden in dem Kolben vorgelegt und der Rührer ist auf ca. 500 UpM einjustiert. Die pH-Messung zeigt nach kurzer Zeit den pH-Wert der Dispersion an. Bei laufendem Rührwerk gibt man dann 25 g des zu untersuchenden Polyisocyanats (Polyisocyanate 1 bis 4) verteilt über 1 Minute in die Dispersion. Der Verlauf des pH-Werts wird bei laufendem Rührwerk als Funktion der Zeit aufgenommen. Bei den Polyisocyanaten 1 und 2 tritt nach einiger Zeit eine zeitlich ziemlich scharf feststellbare Koagulation ein, die rasch zur völligen Verfestigung des Kolbeninhalts führt. Elektrode und Rührer müssen rechtzeitig aus der Mischung herausgenommen werden.

**Tabelle 3**

| Beispiel | Untersuchtes Polyisocyanat | pH-Wert am Anfang der Messung | pH-Wert am Ende der Messung | Koagulation nach (mm) |
|---|---|---|---|---|
| 1 (Vergleich) | 1 | 11 | 9,9 | 160 |
| 1a (Vergleich) | 1 | 11 | nach 100 Minuten wurde der pH-Wert durch NaOH-Nachsatz wieder auf pH 11 angehoben 10,7 | 160 |
| 2 (Vergleich) | 2 | 11 | 9,1 | 250 |
| 3 (erfindungsgem.) | 3 | 11 | 9,3 | keine Koagul. nach 430 min |
| 4 (Vergleich) | 4 | 11 | 9,5 | keine Koagul. nach 350 mm |

### Fazit der Koagulationsversuche:

Die beiden Vergleichsbeispiele auf Basis der primäre NCO-Gruppen enthaltenden Polyisocyanate 1 und 2 (Vergleichsbeispiele 1 und 2) ergeben unabhängig von der Hydrophilierung des Polyisocyanats im Zeitraum bis zu 250 Minuten eine zu völliger Verfestigung laufende Koagulation.

Demgegenüber zeigen die Mischungen mit den erfindungsgemäßen Polyisocyanaten 3 (erfindungsgemäßes Beispiel 3, sekundäre NCO-Gruppen) und 4 (Vergleichsbeispiel 4, tertiäre NCO-Gruppen) selbst nach 350 bzw. 450 Minuten keine Anzeichen einer Koagulatbildung. Diese Mischungen sind auch noch nach dieser Zeit problemlos auf ein Substrat aufzutragen und zu verkleben.

Die nach dem Isocyanatzusatz eintretende Verringerung des pH-Werts ist eine Folge der Isocyanat/Wasser-Reaktion; das dabei entstehende CO₂ neutralisiert einen Teil der vorhandenen Base und verursacht dadurch den pH-Abfall. Die Anfangs- und Endwerte der pH-Messungen liegen aber bei allen Polyisocyanaten nahe beieinander, so daß dieser pH-Abfall nicht als Ursache für die Koagulation anzusehen ist. Dies wird besonders deutlich durch das Vergleichsbeispiel 1a. Dort trat trotz Anheben des pH-Werts durch NaOH-Nachsatz die Koagulation zum gleichen Zeitpunkt ein, wie bei dem Ansatz ohne Anhebung des pH im Vergleichsbeispiel 1. Insofern ist der Unterschied zwischen den Polyisocyanaten und die Sonderstellung des erfindungsgemäßen Polyisocyanats 3 nicht vorhersehbar und absolut überraschend. Auch das vorwiegend teritäre NCO-Gruppen aufweisende Polyisocyanat 4 führt nicht zu Koagulation. Es wird sich aber bei den Klebeversuchen D) zeigen, daß es keine zur Vernetzung ausreichende Reaktivität besitzt.

### D) Durchführung der Klebeversuche:

100 g Klebstoff-Formulierung aus Tabelle 2 wird mit 5 g der Vernetzerisocyanate versetzt und mit einem kleinen Propellerrührer intensiv vermischt. Dabei kann es - bedingt durch den gegebenenfalls vorhandenen Lösemittelgehalt des Polyisocyanats - zu einem leichten Viskositätsanstieg kommen, der nichts mit der zeitabhängigen Koagulation zu tun hat. Anschließend wird die erhaltene 2K-Klebstoffmischung mittels Pinsel auf einen frisch gerauhten SBR-Gummi (NORA, Testmaterial der Fa. Freudenberg, Weinheim, Deutschland) aufgetragen. Man läßt die beschichteten Prüfkörper 1 Stunde bei Raumtemperatur und ca. 50 % relativer Luftfeuchte trocknen.

Je zwei der Prüfkörper werden mit einem Infrarot-Aktiviergerät der Fa. Funk (Dr. Ing. Funk GmbH, 8000 München, Deutschland) 4 sec lang erwärmt, mit den Klebstoff-beschichteten Flächen aneinandergelegt und sofort mit einem Flächendruck von 4 kg/cm² zusammengepreßt.

Nach dem Verpressen werden die verklebten Prüfkörper 1 Woche bei Raumtemperatur/50 % relative Feuchte abgelagert und dann im Zugscherversuch auf Wärmefestigkeit (Softening Point nach ASTM D 816) sowie im Schälversuch auf Schälfestigkeit in Anlehnung an DIN 53 273 geprüft. Jeder in der Tabelle 4 angegebene Meßwert ist ein Mittelwert aus 5 Einzelmessungen.

**Tabelle 4**

| Beispiel | CR-Dispersion | Polyisocyanat | Schälfestig keit in Anlehnung an DIN 53 273 (N/mm) | Softening nach ASTM D 816 (°C) |
|---|---|---|---|---|
| 5 (Vergleich) | 1 | 2 | - | 58 |
| 6 (Vergleich) | 1 | ohne | - | 59 |
| 7 (Vergleich) | 1 | 3 | 4,9 | 78 |
| 8 (erf.-gem.) | 2 | 3 | 5,4 | 88 |
| 9 (erf.-gem.) | 3 | 3 | 5,7 | 91 |
| 10 (erf.-gem.) | 4 | 3 | 6,1 | 111 |
| 11 (Vergleich) | 3 | 4 | - | 50 |

### Fazit der Klebeversuche:

Das Vergleichsbeispiel 5 zeigt, daß die nicht erfindungsgemäße Kombination aus CR-Dispersion 1 und Polyisocyanat 2, welches primäre NCO-Gruppen besitzt, nicht allein wegen der Koagulation (s. Tabelle 3, Beispiele 1, 1a und 2) ungeeignet ist, sondern auch wegen mangelnder Vernetzungsfähigkeit der Dispersion zu einer geringen Wärmefestigkeit des Klebstoffs führt.

Die Beispiele 8 bis 10 belegen zum einen, daß das sekundäre NCO-Gruppen enthaltende erfindungsgemäße Polyisocyanat 3 nicht nur keine Koagulation der Klebstoffmischung verursacht (s. Tabelle 3, Beispiel 3) sondern auch Verklebungen mit hohen Schälfestigkeiten und insbesondere mit hoher Wärmefestigkeit (im Vergleich zu dem unvernetzten Klebstoff in Beispiel 6) ergeben. Dagegen ist die Reaktivität des tertiäre NCO-Gruppen aufweisenden Polyisocyanats 4 für eine Vernetzung des Klebstoffs zu gering (vergleichsbeispiel 11).

Ferner wird durch den Vergleich der Beispiele 7 bis 10 belegt, daß alkalische Dispersionen der Polymerisate des 2-Chlorbutadiens-1,3 nach hydrolytischer Abspaltung eines Teils der Cl-Atome des Polymers Klebstoffe mit erheblicher zusätzlicher Vernetzungsfähigkeit mit Isocyanaten herzustellen gestatten. Die Vernetzungsfähigkeit (s. Tabelle 4) (Maß ist die Schälfestigkeit und insbesondere die Beständigkeit der Verklebung in der Wärme (Softening Point)) steht dabei im direkten Zusammenhang mit dieser Abspaltung, welche am Chloridgehalt der Dispersion (s. Tabelle 1) meßbar ist.

## Patentansprüche

1. Wäßrige, vernetzende Polymerdispersionen, **dadurch gekennzeichnet, daß** sie aus
A) 98 bis 80 Gew.-% einer 40 bis 60 %igen wäßrigen, alkalischen Polymerdispersion auf Basis von 2-Chlorbutadien-1,3 mit einem pH-Wert von ≥9,5 und einem durch Abspaltung von Chloratomen aus dem Polymer entstandenen Chloridgehalt von ≥300 ppm
und
B) 2 bis 20 Gew.-% durch Cyclotrimerisierung aliphatischer und/oder cycloaliphatischer Diisocyanate erhaltenen Polyiscyanaten mit überwiegend oder ausschließlich sekundär gebundenen NCO-Gruppen
bestehen.

2. Wäßrige, vernetzende Polymerdispersionen nach Anspruch 1, **dadurch gekennzeichnet, daß** sie die Komponente A) zu 95 bis 90 Gew.-% und die Komponente B) zu 5 bis 10 Gew.-% enthalten.

3. Polymerdispersionen nach Ansprüchen 1 und 2, **dadurch gekennzeichnet, daß** der durch Abspaltung aus dem Polymer entstandene Chloridgehalt der Komponente A) ≥400 ppm beträgt.

4. Verwendung der wäßrigen, vernetzenden Polymerdispersionen nach Anspruch 1 zur Herstellung von wäßrigen Klebstoffen.

## Claims

1. Aqueous crosslinking polymer dispersions, **characterized in that** they consist of
A) 98 to 80 wt.% of a 40 to 60% aqueous alkaline polymer dispersion based on 2-chlorobuta-1,3-diene, with a pH of ≥9.5 and a chloride content, arising from the elimination of chlorine atoms from the polymer, of ≥300 ppm,
and
B) 2 to 20 wt.% of polyisocyanates obtained by the cyclotrimerization of aliphatic and/or cycloaliphatic diisocyanates, containing NCO groups bonded predominantly or exclusively as secondary groups.

2. Aqueous crosslinking polymer dispersions according to Claim 1, **characterized in that** they contain 95 to 90 wt.% of component A) and 5 to 10 wt.% of component B).

3. Polymer dispersions according to Claims 1 and 2, **characterized in that** the chloride content of component A), arising from elimination from the polymer, is ≥400 ppm.

4. Use of the aqueous crosslinking polymer dispersions according to Claim 1 for the preparation of water-based adhesives.

## Revendications

1. Dispersions aqueuses de polymères réticulantes, **caractérisées en ce qu'**elles sont constituées de
A) 98 à 80 % en poids d'une dispersion de polymère alcaline, aqueuse à base de 2-chloro-buta-1,3-diène avec une valeur de pH ≥ 9,5 et une quantité de chlore, provenant de l'élimination des atomes de chlore du polymère, ≥ 300 ppm, et
B) 2 à 20 % en poids de polyisocyanates obtenus par cyclotrimérisation de diisocyanates aliphatiques et/ou cycloaliphatiques avec des groupes NCO liés principalement ou exclusivement comme groupes secondaires.

2. Dispersions aqueuses de polymères réticulantes selon la revendication 1, **caractérisées en ce qu'**elles contiennent 95 à 90 % en poids de composant A) et 5 à 10 % en poids de composant B).

3. Dispersions aqueuses de polymères réticulantes selon les revendications 1 et 2, **caractérisées en ce que** la quantité de chlore du composant A) provenant de l'élimination du polymère, est ≥ 400 ppm.

4. Utilisation des dispersions aqueuses de polymères réticulantes selon la revendication 1 pour la préparation d'adhésifs aqueux.
